Europäisches Patentamt

European Patent Office

Office européen des brevets

(11) Veröffentlichungsnummer: **0 459 504 A1**

# (12) EUROPÄISCHE PATENTANMELDUNG

(21) Anmeldenummer: **91108900.1**

(22) Anmeldetag: **31.05.91**

(51) Int. Cl.⁵: **G01P 15/08**, G01C 9/14

(30) Priorität: **01.06.90 DE 4017773**

(43) Veröffentlichungstag der Anmeldung:
**04.12.91 Patentblatt 91/49**

(84) Benannte Vertragsstaaten:
**DE ES FR GB IT SE**

(71) Anmelder: **S.E. SENSORIK GmbH & Co. KG**
**Vahrenwalder Strasse 6-8**
**W-3000 Hannover 1(DE)**

(72) Erfinder: **Schult, Roger**
**Peter-May-Strasse 59**
**W-5042 Erftstadt(DE)**
Erfinder: **von Wedekind, Oscar**
**Frielingerstrasse 11**
**W-3008 Garbsen 6(DE)**

(74) Vertreter: **Ritter und Edler von Fischern,**
**Bernhard,Dipl.-Ing. et al**
**HOFFMANN - EITLE & PARTNER**
**Arabellastrasse 4**
**W-8000 München 81(DE)**

(54) **Bewegungsgrössensensor mit optischem Messwertaufnehmer.**

(57) Eine Vorrichtung zur Bestimmung von Bewegungsgrößen, wie Lageänderung oder Beschleunigung eines Objektes, weist ein mit einer Masse behaftetes Element (16) auf, welches sich relativ zum Bezugssystem der Vorrichtung bewegen kann und selbsttätig in eine Neutrallage rückkehren kann. Das mit der Masse in fester Verbindung stehende Element (16) weist eine Abtastfläche (16a) mit einer optisch erfaßbaren Struktur (9) auf. Die Abtastfläche hat eine derartige Gestalt, daß sich für jede Auslenkung derselben der jeweils von einem optischen Abtastsystem ( 12) abgetastete Abtastflächenbereich innerhalb eines vom optischen Abtastsystem vorgebenen fokussierten Bereiches befindet.

Fig. 1

Die Erfindung betrifft eine Vorrichtung zur Bestimmung von Bewegungsgrößen wie Lageänderung oder Beschleunigung eines Objektes, welche ein mit einer Masse behaftetes Element umfaßt, welches sich relativ zum Bezugssystem der Vorrichtung bewegen kann und selbstätig in eine Neutrallage rückkehren kann.

Aus der Enzyklopädie Naturwissenschaft und Technik, Zweiburgen Verlag Weinheim, ist es bekannt, Bewegungsgrößen wie Beschleunigung oder Lageveränderungen mit Hilfe von schwerer Masse unter Ausnutzung von Massenträgheit bzw. Schwerkraft (Gravitation) zu messen. Üblicherweise wird dabei eine von der zu messenden Bewegungsgröße verursachte Auslenkung der Masse relativ zum Bezugssystem des Bewegungsgrößensensors erfaßt und daraus ein Meßwert der Bewegungsgröße ermittelt. Herkömmlicherweise wird die Erfassung der relativen Auslenkung der Masse im Bezugssystem des Bewegungssensors mit Wegaufnehmern realisiert, welche zum Beispiel nach dem Prinzip eines veränderlichen Widerstandes arbeiten. Dabei wird im wesentlichen die Masse mit einem auf einer Widerstandsschicht gleitenden Abgreifkontakt so verbunden, daß die Lageänderung der Masse die Position des Abgreifkontaktes auf der Widerstandsschicht verändert und eine direkte Beziehung zwischen der Lage der Masse und dem eingestellten Widerstandswert besteht, so daß der Widerstandswert ein Maß für die zu bestimmende Bewegungsgröße ist, aus welchem ein derselben entsprechendes elektrisches Signal erzeugt werden kann.

Ein anderes bekanntes Prinzip der Erfassung der relativen Auslenkung der Masse arbeitet induktiv. Dabei ist die Masse mit einem Kern aus magnetischem Material verbunden, welcher in Abhängigkeit von der relativen Auslenkung der Masse in einer Spule verschoben wird, so daß dadurch die elektrischen Eigenschaften der Spule in direkter Abhängigkeit zur Auslenkung stehen und zur Bestimmung und zur Umwandlung derselben in ein elektrisches Signal verwendet werden können.

Für spezielle Anwendungen, nämlich zur Messung von zeitlich schnell veränderlichen Beschleunigungen ist es bekannt, piezoelektrische Elemente zu verwenden, welche die auf Grund der Beschleunigung auf die Masse wirkende Kraft direkt in ein elektrisches Signal umwandeln, dessen Größe in direkter Beziehung zur Beschleunigung steht.

Bei diesem zum Stand der Technik zählenden Bewegungsgrößensensoren ergibt sich die Schwierigkeit, die Lageveränderung der Masse im Bezugssystem des Sensors so zu erfassen, daß aus der Erfassung eine präzise quantitative Aussage über die gemessene Bewegungsgröße abgeleitet werden kann, wobei die Erfassung der Lageänderung keinen Einfluß auf diese ausüben soll, um den Meßwert nicht zu verfälschen. Ferner ergibt sich die Schwierigkeit, daß ein Sensor, welcher die zuvor genannten Anforderungen erfüllt, zudem möglichst einfach aufgebaut sein soll, um eine zuverlässige Funktion bzw. Betriebssicherheit zu gewährleisten und gleichzeitig die Fertigungskosten niedrig sowie das Gewicht und den Raumbedarf des Sensors so klein wie möglich zu halten.

Mit den zuvor beschriebenen, zum Stand der Technik zählenden Sensoren ist eine gleichzeitige optimale Lösung aller dieser Schwierigkeiten nicht erzielbar.

So erweist sich das Prinzip des Widerstandsaufnehmers als nachteilig hinsichtlich der erzielbaren Meßgenauigkeit, weil eine Lageveränderung der Masse nur gegen die zur Verschiebung des Abgriffs auf der Widerstandsbahn benötigte Kraft stattfinden kann, was das Meßergebnis unabänderlich verfälscht.

Für den induktiven Aufnehmer ist der relativ große Platzbedarf der Spule zusammen mit deren Gewicht und schließlich die erforderliche Komplexität der Auswerteelektronik von nachteiliger Bedeutung.

Der piezoelektrische Aufnehmer ist, wie oben bereits erwähnt, nur für zeitveränderliche Beschleunigungsmessungen geeignet und benötigt ferner ebenso eine relativ aufwendige Auswerteelektronik.

Aufgabe der vorliegenden Erfindung ist es daher, einen Bewegungsgrößensensor der oben genannten Art zu schaffen, welcher eine einfache und zugleich präzise Umwandlung der Bewegungsgröße in ein entsprechendes elektrisches Signal erlaubt und dabei einfach konstruiert ist, geringen Platzbedarf hat und hohe Betriebssicherheit bietet.

Erfindungsgemäß wird diese Aufgabe dadurch gelöst, daß das mit einer Masse in fester Verbindung stehende Element eine Abtastfläche mit einer optisch erfaßbaren Struktur aufweist, und die Abtastfläche eine derartige Gestalt hat, daß sich für jede Auslenkung derselben der jeweils von einem optischen Abtastsystem abgetastete Abtastflächenbereich innerhalb einer vom optischen Abtastsystem vorgegebenen fokussierten Bereiches befindet.

Eine derartige erfindungsgemäße Vorrichtung hat den Vorteil, daß mit einer einfachen Konstruktion ein Bewegungsgrößensensor mit hoher Präzision und hoher Zuverlässigkeit erzielt wird, dessen Volumenbedarf sowie Gewicht gering sind. Das optische Abtastverfahren erlaubt eine exakte Bestimmung der Auslenkung der Masse relativ zum Bezugssystem des Sensors und arbeitet mit einer aufwandarmen digitalen Auswerteelektronik. Dadurch, daß die Gestalt der mit dem Muster zur Auswertung versehenen Oberfläche so gewählt ist, daß sich das jeweils vom optischen Sensor abgetastete Oberflächenelement für jede Auslenkung innerhalb der Erfassungsgrenzen des Sensors immer innerhalb einem Fokusbereich mit einer festen Position relativ zur Abtastoptik befindet, ist gewährleistet, daß die Abtastoptik für alle Betriebszustände des Sensors optimal arbeitet und der Aufwand zu deren Fokussierung minimal ist.

Weitere vorteilhafte Ausgestaltungen finden sich in den Unteransprüchen.

Die nachfolgende Beschreibung der in den Zeichnungen dargestellten Ausführungsbeispiele soll die Erfindung näher erläutern. Im einzelnen zeigt:

Fig. 1     den erfindungsgemäßen Prinzipaufbau eines Bewegungsgrößensensors;

Fig. 2a    ein erstes Ausführungsbeispiel der Erfindung;

Fig. 2b    das erste Ausführungsbeispiel in einer Seitenansicht;

Fig. 3a    ein zweites Ausführungsbeispiel;

Fig. 3b    einen Schnitt durch die Vorrichtung des zweiten Ausführungsbeispiels;

Fig. 3c    einen Schnitt durch den ausgelenkten Sensor des zweiten Ausführungsbeispiels;

Fig. 4a    ein drittes Ausführungsbeispiel;

Fig. 4b    einen Schnitt durch die Vorrichtung des dritten Ausführungsbeispiels;

Fig. 5     ein viertes Ausführungsbeispiel;

Fig. 6a    ein fünftes Ausführungsbeispiel;

Fig. 6b    einen Schnitt durch die Vorrichtung des fünften Ausführungsbeispiels;

Fig. 7     ein erstes Ausführungsbeispiel einer Abtastoptik;

Fig. 8a    eine Seitenansicht eines zweiten Ausführungsbeispiels einer Abtastoptik;

Fig. 8b    einen Schnitt durch die Abtastoptik des zweiten Ausführungsbeispiels;

Fig. 9     ein drittes Ausführungsbeispiel einer Abtastoptik;

Fig. 10    ein Muster optischer Codierungen für einen erfindungsgemäßen Sensor;

Fig. 11    ein Diagramm zur näheren Beschreibung der Eigenschaften einer optischen Codierung nach Fig. 10.

In der nachfolgenden Beschreibung der Zeichnungen werden für identische oder in ihrer Funktion äquivalente Teile jeweils gleiche Bezugszeichen verwendet.

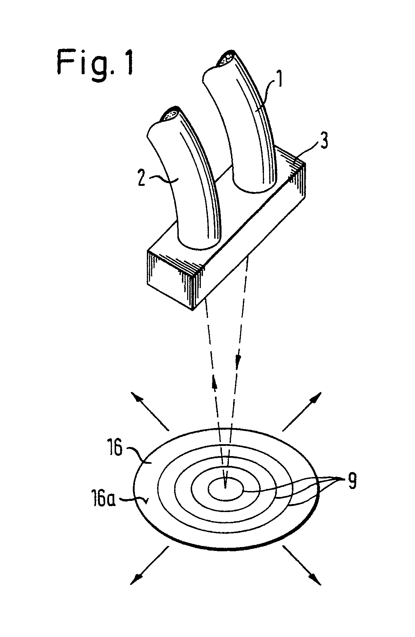

Fig. 1 zeigt das Prinzip eines Bewegungsgrößensensors. Eine mit einem optisch erfaßbaren Muster bzw. mit einer optischen Codierung versehene Abtastfläche 16a eines mit einer Masse behafteten Elementes 16, welches sich abhängig von auf den Sensor einwirkenden Bewegungsgrößen, wie Beschleunigung oder Lageveränderung und entsprechend diesen Bewegungsgrößen im Bezugssystem des Sensors bewegen kann, wird von einer Abtastoptik, welche einen Lichtleiter 1 zur Zuführung von Licht, einen Lichtleiter 2 zur Aufnahme von von der Oberfläche reflektiertem Licht, einer Optik 3, welche die vom Lichtleiter 1 zugeführten Lichtstrahlen auf die Oberfläche fokussiert, sowie reflektierte Strahlung dem Leiter 2 zuführt, umfaßt, abgetastet. Die der zu messenden Bewegungsgröße entsprechende Auslenkung des Elementes 16 relativ im Bezugssystem des Sensors wird mit Hilfe der Abtastoptik und dem auf der Oberfläche des Elementes 16 angeordneten optischen Muster quantitativ erfaßt, so daß aus der Kenntnis der Masse des Elementes 16 sowie der abhängig von der Auslenkung des Elementes 16 wirkenden Rückstellkräfte auf dieses mittels dem Trägheitsgesetz oder dem Gravitationsgesetz, die auf den Sensor wirkende Bewegungsgröße berechnet werden kann. Dabei kann durch geeignete Strukturierung des optischen Musters auf der Abtastfläche des Elementes 16 die Empfindlichkeitscharakteristik des Sensors auf einfache Weise bestimmt werden. So kann durch geeignete Wahl der optischen Codierung zum Beispiel eine lineare oder eine logarithmische Meßcharakteristik erzielt werden, ferner läßt sich mit Hilfe einer entsprechend gewählten optischen Struktur auch die Richtungscharakteristik des Sensors einstellen. Die in Fig. 1 dargestellten konzentrischen Kreise 9 auf der Abtastfläche des Elementes 16 sind nur eine spezielle Ausführungsform aus einer Vielfalt von denkbaren möglichen Ausführungen. Die Gestalt der Abtastläche des Elementes 16 ist so gewählt, daß für jede Auslenkung des Elementes 16, der vom optischen Sensor jeweils abgetastete Abtastbereich auf der Abtastfläche 16a innerhalb eines Bereiches in unveränderlicher Position relativ zum optischen Sensor liegt, innerhalb welchem die optimale Funktion der optischen Abtastvorrichtung gewährleistet ist. Für die optische Abtastung wird ein über den Lichtleiter 1 zugeführter Lichtstrahl von der auf der Oberfläche des Elementes 6 vorhandenen optischen Struktur moduliert und der so modulierte Lichtstrahl vom Lichtleiter 2 einer Auswerteelektronik zugeführt, welche in der Lage ist, aus der Modulation des Lichtstrahls die gemessene Bewegungsgröße zu ermitteln.

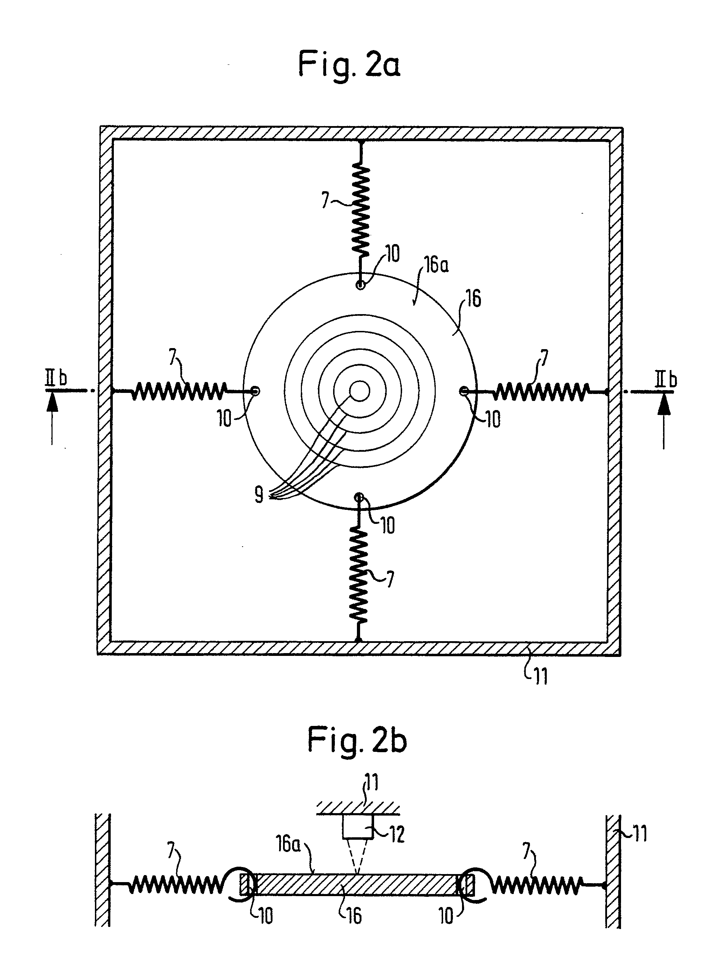

Fig. 2a zeigt eine Aufsicht eines ersten Ausführungsbeispieles gemäß der vorliegenden Erfindung. Ein mit einer Masse behaftetes Element 16 ist auf seiner Oberfläche mit einer optisch abtastbaren Struktur 9 versehen und wird über Federn 7 im Gehäuse 11 des Sensors gehalten. Die Bezugsziffer 10 bezeichnet Bohrungen, welche im Element 16 vorgesehen sind, in welche die Federn 7 eingehängt werden können. Das über die Federn im Gehäuse 11 aufgehangene Element 16 kann aufgrund von auf das Gehäuse 11 wirkende Beschleunigungen oder durch Lageabweichungen des Gehäuses 11 aus der Horizontalen seine Position innerhalb des Gehäuses 11 entsprechend der jeweiligen zu messenden Bewegungsgröße verändern, wobei eine derartige Lageänderung mit Hilfe eines optischen Abtastsystems durch Abtastung der Struktur auf der Oberfläche des Elementes 6 festgestellt wird. In dieser Figur ist das optische Abtastsystem selbst aus Gründen der Übersichtlichkeit nicht dargestellt.

Fig. 2b zeigt einen Schnitt durch die in Fig. 2a gezeigte Vorrichtung. Aus dieser Schnittansicht wird deutlich, daß die Abtastfläche 16a des Elementes 16, welche mit einer optischen Strukturierung versehen ist, als Ebene ausgebildet werden kann. Die Bezugsziffer 12 bezeichnet ein fest am Gehäuse 11 montiertes optisches Abtastsystem, welches oberhalb der Abtastfläche des Elementes 16 so angebracht ist, daß es die optische Struktur der Oberfläche abtasten und ein die abgetastete Information tragendes Signal einer Auswertevorrichtung zuführen kann.

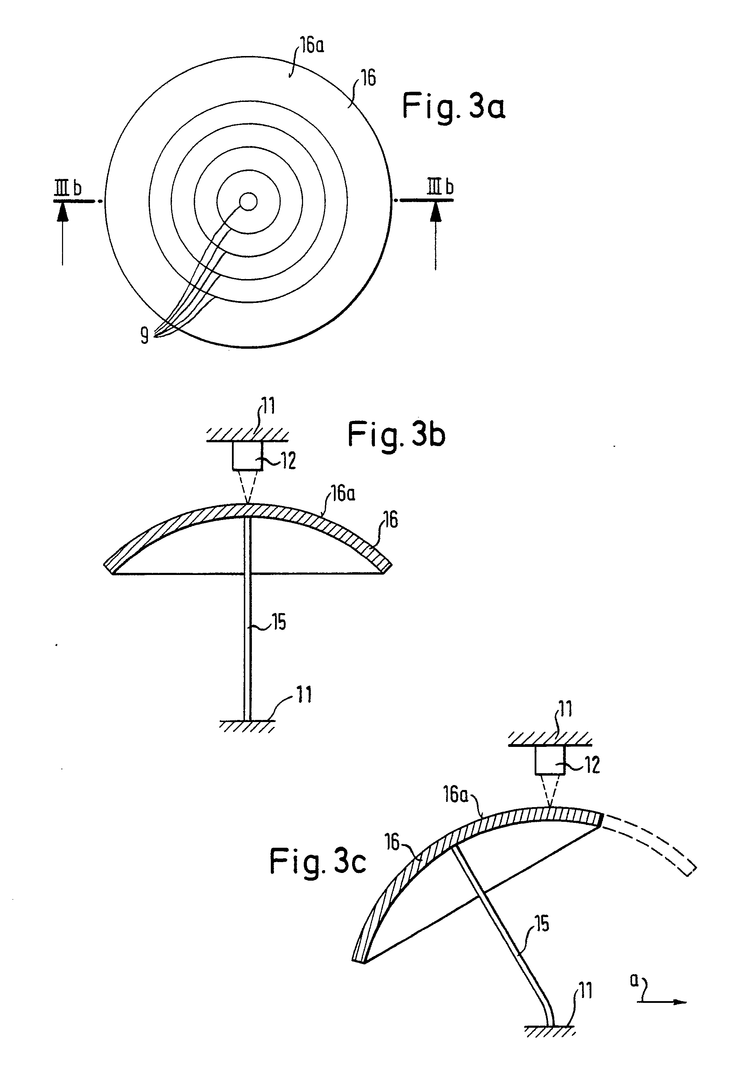

Fig. 3a zeigt ein zweites Ausführungsbeispiel gemäß der vorliegenden Erfindung in einer Ansicht von oben. In diesem Ausführungsbeispiel bezeichnet das Bezugszeichen 16 ein mit einer Masse behaftetes Element, welches eine gewölbte Oberfläche aufweist, die mit einer optischen Struktur versehen ist, welche von einem nicht dargestellten optischen Abtastsystem gelesen wird. Wie bereits oben erwähnt, stellen auch in diesem Ausführungsbeispiel die konzentrischen Ringe 9 der optischen Struktur auf der Abtastfläche des Elementes 16 nur eines von einer Vielzahl denkbarer Muster dar, wobei durch Wahl eines bestimmten Musters die Charakteristik des Sensors bestimmt werden kann. Das Element 16 ist über einen Federstab, welcher in dieser Figur nicht dargestellt ist, mit dem Gehäuse verbunden. Eine auf das Gehäuse einwirkende Bewegungsgröße, wie z.B. Beschleunigung oder Lageveränderung, bewirkt, daß sich der das Element 16 tragende Federstab verbiegt und das Element 16 im Gehäuse des Sensors auslenkt. Diese Auslenkung wird wiederum von einem in dieser Figur nicht dargestellten optischen Abtastsystem erfaßt und mit einer geeigneten Vorrichtung in einen Meßwert umgesetzt.

Fig. 3b zeigt einen Schnitt durch in Fig. 3a dargestellte Anordnung. Die Bezugszahl 15 bezeichnet einen Federstab, welcher an seinem einen Ende mit dem Gehäuse 11 des Sensors verbunden ist und an seinem anderen Ende das Masse-behaftete Element 16 trägt, so daß dieses gegen die Rückstellkraft des Federstabes 15 ausgelenkt werden kann.

Fig. 3c zeigt einen Schnitt des Sensors gemäß der Fig. 3b in einem beschleunigten Zustand, angedeutet durch den Pfeil a. Die Trägheit der Masse des Elementes 16 bewirkt die Verbiegung des Federelementes 15, und die dadurch bewirkte Auslenkung des Elementes 16 relativ zum Gehäuse 11 des Sensors wird über den optischen Abtaster 12 erfaßt und in einer geeigneten Vorrichtung (nicht dargestellt) in einen Meßwert umgesetzt. Aus dieser Figur wird deutlich, daß die Wölbung der Oberfläche des Elementes 16 so gewählt ist, daß sich bei Auslenkung des Elementes 16 der Abstand zwischen dem jeweiligen abgetasteten Oberflächenelement und der Abtastvorrichtung 12 im wesentlichen nicht ändert.

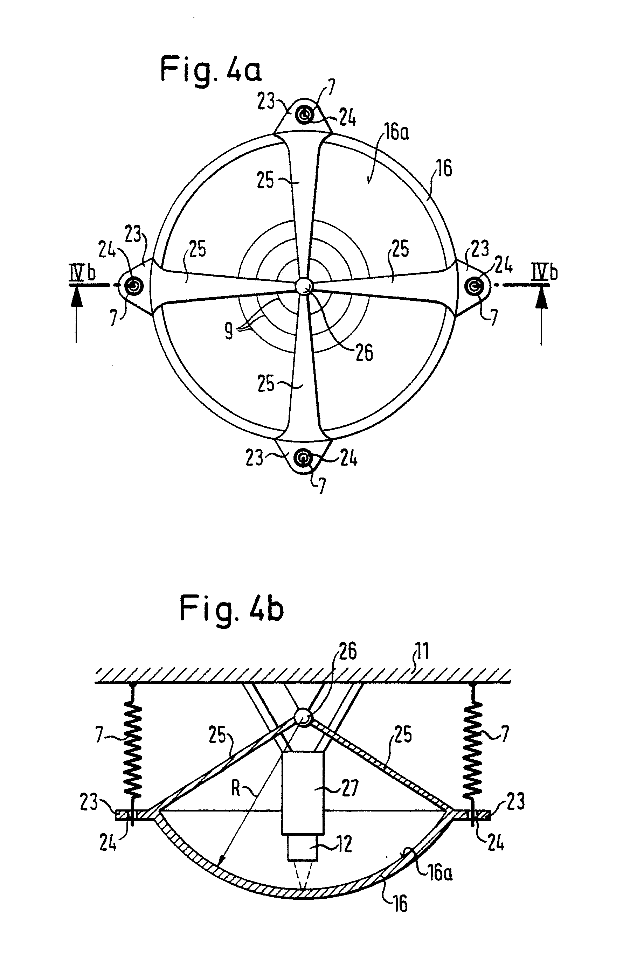

Fig. 4a zeigt eine Draufsicht eines dritten Ausführungsbeispieles gemäß der vorliegenden Erfindung, wobei das Gehäuseoberteil, in welchem die in dieser Figur dargestellte Konstruktion eingehängt wird, nicht dargestellt ist. In dieser Figur bezeichnet die Ziffer 16 ein hohl gewölbtes massebehaftetes Element, welches auf seiner Innenseite auf der Oberfläche 16a der Hohlwölbung mit einer optischen Strukturierung 9 versehen ist, welche von einem nicht dargestellten optischen Abtastsystem gelesen werden kann. Am oberen Rand des hohlgewölbten Randes 16 sind Haltearme 25 befestigt, welche nach oben zusammengeführt werden und sich an ihrem jeweiligen Ende mit einem Kugelgelenk 26 verbinden. Der andere Teil des Kugelgelenkes 26 ist mit dem Gehäusedeckel fest verbunden, so daß die dargestellte Anordnng um den Drehpunkt des Kugelgelenkes 26 herum in alle Richtungen auslenken kann. Ferner sind am oberen Rand des hohlgewölbten Elementes 16 Halterungselement 23 vorgesehen, welche eine Bohrung 24 aufweisen, welche jeweils ein Ende einer Feder 7 aufnehmen.

Fig. 4b zeigt die in Fig. 4a dargestellte Anordnung im Schnitt. Aus dieser Darstellung wird deutlich, daß jeweils ein Ende der Federn 7 mit der Haltevorrichtung 23 durch die Öffnung 24 verbunden ist, und daß jeweils das andere Ende der Federn 7 mit dem Gehäuse 11 verbunden ist. Ebenso mit dem Gehäuse 11 verbunden ist die eine Seite des Kugelgelenkes 26. Die andere Seite des Kugelgelenkes 26 steht in Verbindung mit den Halterungen 25, welche wiederum mit dem oberen Rand des hohlgewölbten Elementes 16 verbunden sind. Die innere Abtastfläche 16a der Hohlwölbung 16 trägt die optische Musterung, welche von dem Abtastsystem 12 abgetastet wird. Das Abtastsystem ist starr mit dem Gehäuse 11 durch die Öffnungen zwischen den Halterungen 25 hindurch mittels der Halterung 27 verbunden, so daß es die Musterung auf der Abtastfläche 16a des Elements 16 lesen kann. Ein für alle Auslenkungen des Elementes 16 konstanter Abstand zwischen der Abtastfläche 16a des Elementes 16 und der optischen Abtastvorrichtung kann dadurch erzielt werden, daß die Innenwölbung des Elementes 16 sphärisch ausgelegt ist. Die sphärische Innenwölbung des Elementes 16 ist in dieser Figur durch den Radius R angedeutet. Der Mittelpunkt der sphärischen Wölbung ist dabei das Kugelgelenk 26. Wirkt nun eine zu bestimmende Bewegungsgröße auf den Sensor gemäß der Figuren 4a, 4b ein, so lenkt das massebehaftete Element 16 gegen die Rückstellkraft der Federn 7 aus, und die Auslenkung wird vom optischen Abtastsystem mit Hilfe der optischen Struktur auf der Innenseite 16a des Elementes 16 erfaßt und von einer nicht dargestellten Vorrichtung in einen der Bewegungsgroße entsprechenden Meßwert umgewandelt.

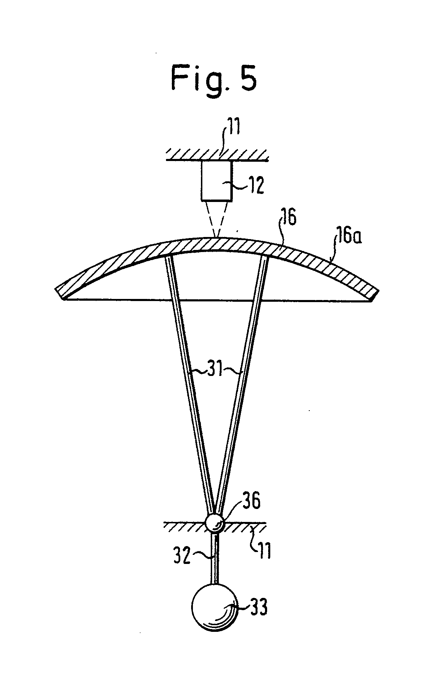

Fig. 5 beschreibt ein viertes Ausführungsbeispiel der vorliegenden Erfindung. Dieses Ausführungsbeispiel sieht einen Lagesensor vor, bestehend aus einem gewölbten Element 16, welches über einen oberen Halterteil 31 und einen unteren Halterteil 32 mit einer Masse 33 starr verbunden ist. An der Verbindungsstelle zwischen dem oberen Halterteil 31 und dem unteren Halterteil 32 ist ein Kugelgelenk 36 vorgesehen, welches eine Auslenkung des Elements 16 in beliebige Richtungen relativ zum Gehäuse 11 der Vorrichtung ermöglicht. Die gewölbte Abtastfläche 16a ist mit einem optisch erfaßbaren Muster versehen, welches von der Einrichtung 12 abgetastet wird, so daß ein der Auslenkung des Elements 16 entsprechender Meßwert abgeleitet werden kann. Die Masse 33 wird so schwer gewählt, daß der Schwerpunkt der Anordnung bestehend aus den Teilen 16, 31, 32, 33 zwischen dem Kugelgelenk 36 und der Masse 33 liegt. Dadurch ist gewährleistet, daß die bewegliche Anordnung, welche das gewölbte Element 16 umfaßt, sich entsprechend den Schwerkraftlinien im Raum orientiert, so daß die von der Abtastvorrichtung 12 gelieferten Meßwerte ein Maß für die Abweichung des Gehäuses 11 von der Horizontalen sind. Somit eignet sich die Anordnung, die in dieser Figur dargestellt ist, als Lagesensor. Die Wölbung des Elements 16 ist so gewählt, daß der Abstand zwischen der Abtastfläche 16a und dem optischen Sensor 12, welcher das auf die Oberfläche 16 aufgebrachte optische Muster liest, für jede Auslenkung des Elements 16 relativ zum Gehäuse 11 im wesentlichen unverändert ist.

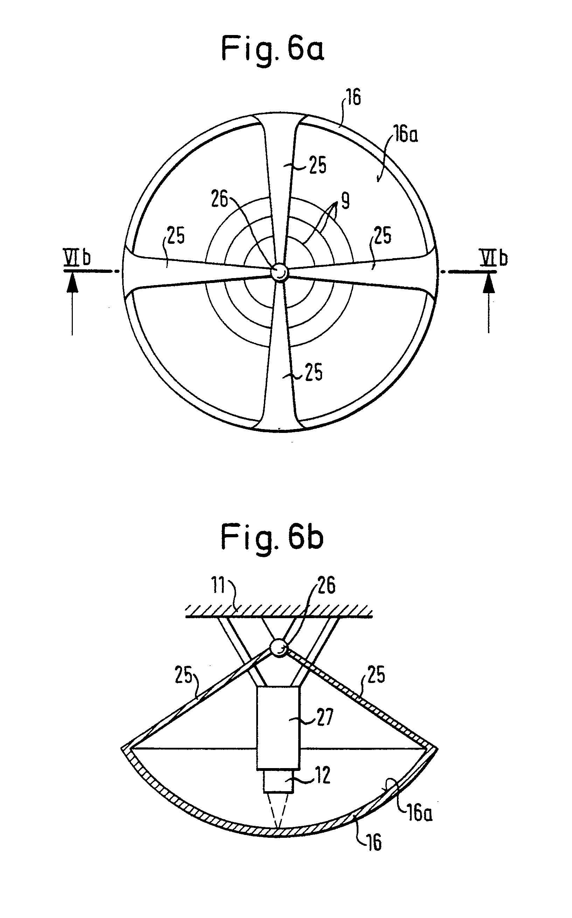

Fig. 6a zeigt eine Ansicht von oben eines fünften Ausführungsbeispieles gemäß der vorliegenden Erfindung. Ebenso wie das vierte Ausführungsbeispiel bezieht sich das fünfte Ausführungsbeispiel auf einen Lagesensor, welcher im wesentlichen dieselben Elemente umfaßt, wie der in den Fig. 4a und 4b dargestellte Sensor, wobei auf die Federn 7 zur Erzeugung einer der Auslenkung des Elements 16 entsprechenden Rückstellkraft und die dazu gehörigen Haltevorrichtungen weggelassen sind. Das massebehaftete Element 16 stellt sicher, daß der Schwerpunkt der Anordnung, bestehend aus dem Element 16 sowie den Halterungen 25 unter der Kugelgelenkaufhängung 26 liegt, so daß sich die Lage des Elementes 16 im Raum an den Schwerkraftlinien orientiert. Die innere Oberfläche 16a des Elementes 16 ist mit optisch lesbaren Mustern 9 versehen, welche von einem in dieser Figur nicht dargestellten optischen Sensor gelesen werden, der fest mit dem Gehäuse des Lagesensors verbunden ist, so daß die vom optischen Sensor gelesenen Informationen von einer nicht dargestellten Vorrichtung in die Abweichung des Lagesensors von der horizontalen betreffende Meßwerte umgewandelt werden können. Wie schon in der Beschreibung der Fig. 4a, 4b erwähnt, ist die Gestalt der Abtastfläche 16a des hohlgewölbten Elementes 16 sphärisch mit einem Mittelpunkt am Ort des Kugelgelenkes 26, so daß für jede Auslenkung des Elementes 16 die Entfernung zwischen der zu lesenden Abtastfläche des Elementes 16 und der lesenden optischen Vorrichtung 12 (nicht dargestellt) im wesentlichen unverändert ist.

Fig. 6b zeigt eine Ansicht eines Schnittes durch die in Fig. 6a dargestellte Vorrichtung. Einziger Unterschied der Fig. 6b zur Fig. 4b ist, daß für den Lagesensor gemäß dem fünften Ausführungsbeispiel der vorliegenden Erfindung, wie in Fig. 6a und 6b dargestellt, auf Rückstellfedern verzichtet werden kann und somit diese in der Fig. 6b nicht dargestellt sind. Im übrigen sei auf die Beschreibung der Fig. 4b verwiesen.

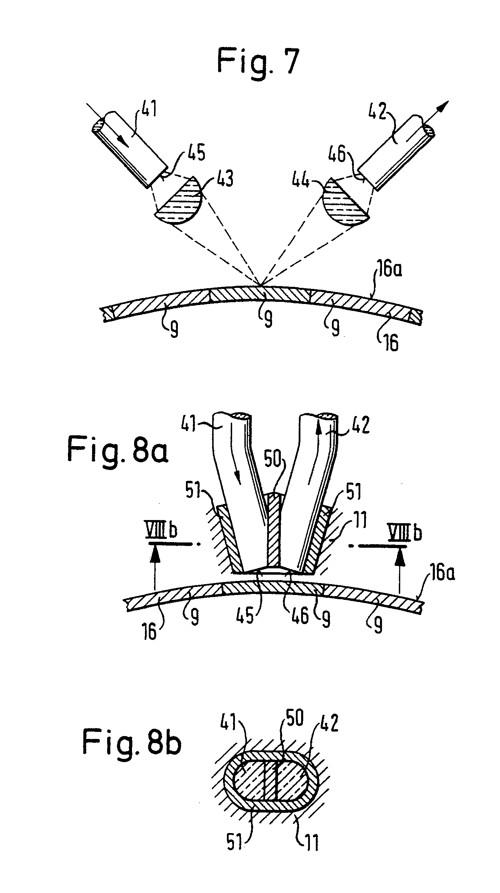

Fig. 7 zeigt ein erstes Ausführungsbeispiel einer Abtastoptik, wie sie zum Lesen des auf die Abtastfläche des auslenkbaren Elements 16 aufgebrachten optischen Musters verwendet werden kann. Der von einer Lichtstrahlenquelle (nicht dargestellt) mittels dem Lichtleiter 41 herbeigeführte Strahl wird von der optischen Einrichtung 43 auf die Oberfläche, welche mit dem zu lesenden optischen Muster versehen ist, focussiert. Der von dem optischen Muster modulierte, reflektierte Strahl wird von der optischen Einrichtung 44 aufgenommen und über diese den Lichtleiter 42 zugeführt, welcher den modulierten Lichtstrahl einer nicht dargestellten Vorrichtung zuführt, welche aus der abgetasteten Information einen der Bewegungsgröße entsprechenden Meßwert ermittelt. Die in Fig. 7 dargestellte optische Abtastvorrichtung eignet sich zur Verwendung in dem vorangehend beschriebenen Bewegungsgrößensensoren gemäß der Ausführungsbeispiel 1 bis 5.

Fig. 8a zeigt ein zweites Ausführungsbeispiel einer Abtastoptik, wie sie für den erfindungsgemäßen Bewegungsgrößensensor gemäß einem der vorangehend beschriebenen Ausführungsbeispiele verwendet werden kann. Diese Anordnung besteht aus einem Lichtleiter 41, welcher der abzutastenden Oberfläche Licht von einer nicht dargestellten Quelle zuführt, und einem Lichtleiter 42, welcher das von der Oberfläche reflektierte Licht einer Auswertevorrichtung zuführt. Die Lichtleiter 41 und 42 sind durch einen optischen Isolator 50 voneinander getrennt, welcher verhindert, daß über den Lichtleiter 41 zugeführtes Licht direkt, ohne Reflektion an einer abzutastenden Oberfläche, in den Lichtleiter 42 und damit zur Auswertevorrichtung gelangen kann. Die beiden Lichtleiter werden in einer Halterung 51 so nahe beieinander und in unmittelbarer Nähe der abzutastenden Oberfläche angeordnet, daß eine optische Fokussiervorrichtung zur Bündelung des vom Lichtleiter 41 auf die Oberfläche geleiteten Lichtes oder zum Auffangen des von der Oberfläche reflektierten Lichtes entfallen kann. Diese Ausführungsform zeichnet sich daher durch geringen Aufwand in der Konstruktion sowie einen geringen Raumbedarf aus. Die unterschiedliche Schraffierung der drei abgeteilten Zonen des Elementes 16 deutet die verschiedenen optischen Eigenschaften der jeweiligen Zonen entsprechend dem auf die Abtastfläche des Elementes 16 aufgebrachten optischen Muster an, welches von der Vorrichtung abgetastet wird. Die Bezugszeichen 45 bzw. 46 kennzeichnen die Austrittsoberfläche des Lichtleiters 41 bzw. die Oberfläche des Lichtleiters 42, durch welche das reflektierte Licht in den Lichtleiter 42 eintritt.

Die Fig. 8b zeigt einen Schnitt der in Fig. 8a dargestellten Abtastvorrichtung. Die Halterung 51 umschließt das Lichtleiterpaar 41 und 42, welches vom optischen Isolator 50 voneinander getrennt ist. Über den Halter 51 steht die Abtastvorrichtung in fester Verbindung mit dem Gehäuse 11 des Bewegungsgrößensensors.

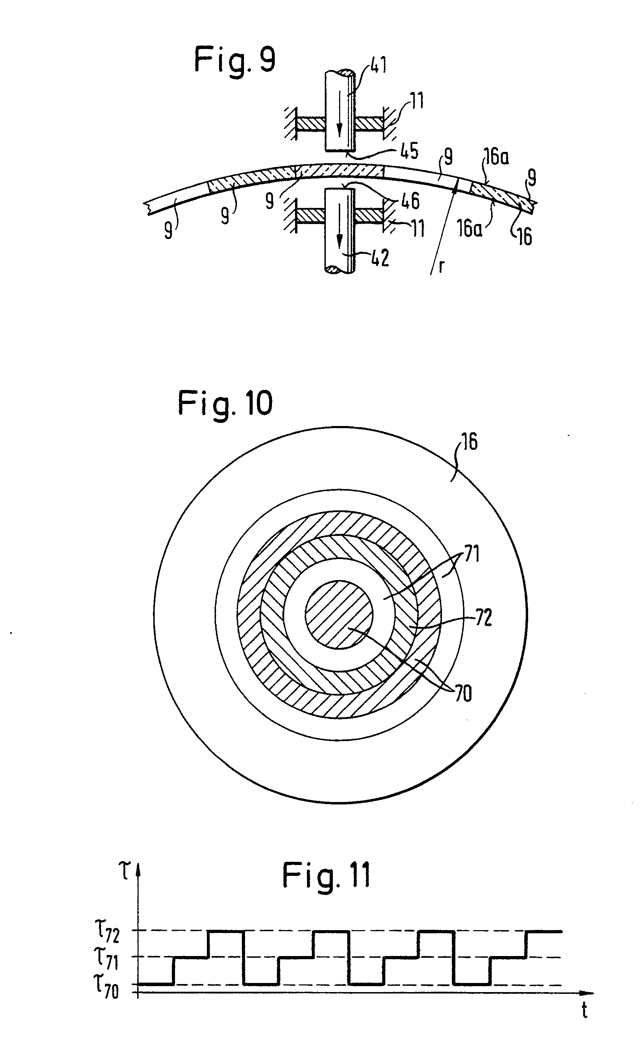

Fig. 9 zeigt ein drittes Ausführungsbeispiel einer Abtastvorrichtung, wie sie zum Beispiel für das erste, dritte oder fünfte Ausführungsbeispiel eines Bewegungsgrößensensors gemäß der vorliegenden Erfindung verwendet werden kann. Bei Verwendung eines optischen Sensors gemäß diesem Ausführungsbeispiel wird das Element 16 transparent gestaltet, so daß das optische Muster, welches von dem optischen Abtaster aufgenommen werden soll, eine Gradation in der Transparenz aufweist, welche dazu geeignet ist, daß aus ihrer Abtastung die gewünschte Information über die Auslenkung des Elements 16 erhalten werden kann. Dieses ist in den Fig. 10 und 11 näher beschrieben. Die Fig. 10 zeigt eine mögliche Anordnung von konzentrischen Gradationen, welche sich je nach verwendetem optischen Abtastsensor entweder auf die Reflektivität der Oberfläche oder auf die Transparenz der abzutastenden Elemente bezieht. Das Bezugszeichen 16a bezeichnet die abzutastende Oberfläche. Die Bezugszeichen 70 bis 72 bezeichnen drei aufeinander folgende, in bestimmter, wiederkehrender Reihenfolge angeordnete, voneinander unterscheidbare Gradationen. Wie bereits oben erwähnt, ist die hier dargestellte kreisförmige konzentrische Anordnung der Gradationen nur eine spezielle Anordnung aus einer Vielfalt von denkbaren, wobei die Gestalt der Gradation eine Möglichkeit ist, die Meßcharakteristik des Bewegungsgrößensensors, zum Beispiel seine Richtungscharakteristik, zu bestimmen. Fig. 11 zeigt ein Diagramm, welches über dem vom Mittelpunkt des Elementes 16 aus gemessenen Radius r für den Fall einer konzentrischen Gradation, die Reflektivität für ein mögliches Ausführungsbeispiel der Gradation angibt. Die Abtastung einer Gradation gemäß der Fig. 11 erlaubt eine eindeutige Aussage darüber, ob sich die Abtastvorrichtung relativ vom Mittelpunkt weg oder auf diesen zu bewegt, wobei aus dieser Information zusammen mit der Anzahl der überschrittenen Gradationsgrenzen (z.B. von 70 nach 71) eindeutig bestimmen läßt, über welcher jeweiligen Gradationszone auf der Oberfläche des Elementes 16 sich das optische Abtastelement befindet, so daß daraus der radiale Abstand des optischen Abtastsensors vom Mittelpunkt der Oberfläche des Elementes 16 erhalten werden kann, welcher wiederum der zu messenden Bewegungsgröße entspricht.

**Patentansprüche**

1. Vorrichtung zur Bestimmung von Bewegungsgrößen, wie Lageänderung oder Beschleunigung eines Objektes, welche ein mit einer Masse behaftetes Element (16) umfaßt, welches sich relativ zum Bezugssystem der Vorrichtung bewegen kann und selbststätig in eine Neutrallage zurückkehren kann,

   dadurch **gekennzeichnet, daß**

   - das mit der Masse in fester Verbindung stehende Element (16) eine Abtastfläche (16a) mit einer optisch erfaßbaren Struktur (9) aufweist, und
   - die Abtastfläche eine derartige Gestalt hat, daß sich für jede Auslenkung derselben der jeweils von einem optischen Abtastsystem (3, 12) abgetastete Abtastflächenbereich innerhalb eines vom optischen Abtastsystems vorgegebenen fokussierten Bereiches befindet.

2. Vorrichtung nach Anspruch 1, dadurch **gekennzeichnet, daß** die Neutrallage des Elementes (16) durch Gravitationskraft oder durch ein Federsystem bestimmt ist.

3. Vorrichtung nach einem der Ansprüche 1 oder 2, dadurch **gekennzeichnet, daß** das Element (16) in einer Ebene auslenkbar ist und eine ebene Abtastfläche (16a) hat.

4. Vorrichtung nach einem der vorangehenden Ansprüche,
   dadurch **gekennzeichnet,** daß
   das Element (16) um ein räumliches Zentrum (26, 36) schwenkbar ist, und daß die Abtastfläche (16a) eine sphärische Gestalt hat.

5. Vorrichtung nach Anspruch 4,
   dadurch **gekennzeichnet,** daß
   das Element (16) von einer Feder (15) getragen wird.

6. Vorrichtung nach Anspruch 4,
   dadurch **gekennzeichnet,** daß
   das Element (16) und eine Masse (33) Bestandteile eines Pendels sind.

7. Vorrichtung nach Anspruch 6,
   dadurch **gekennzeichnet,** daß
   die Masse (33) und das Element (16) bezüglich des Drehzentrums (36) des Pendels auf derselben Seite oder auf verschiedenen Seiten angeordnet sind, so daß sich im letzteren Fall der Schwerpunkt des Pendels unterhalb seines Drehzentrums befindet.

8. Vorrichtung nach einem der vorangehenden Ansprüche,
   dadurch **gekennzeichnet,** daß
   die Abtastfläche (16a) lichtreflektierend ausgebildet ist und daß die Abtastfläche in mehrere Zonen (70 bis 72) unterschiedlichen Reflexionsgrades eingeteilt ist, die ein optisches Muster bilden.

9. Vorrichtung nach einem der Ansprüche 1 bis 8,
   dadurch **gekennzeichnet,** daß
   das Element (16) transparent ausgebildet ist und in eine Anzahl Zonen (70 - 72) unterschiedlicher Transparenz eingeteilt ist, die ein optisches Muster bilden.

10. Vorrichtung nach einem der Ansprüche 8 oder 9,
    dadurch **gekennzeichnet,** daß
    die Zonen konzentrische Ringe um einen Abtastpunkt für die Neutrallage der Abtastfläche bilden.

11. Vorrichtung nach einem der Ansprüche 8 bis 10,
    dadurch **gekennzeichnet,** daß
    die Abfolge der Zonen so gewählt ist, daß mit dem optischen Abtastsystem bei Abtastung des Überganges (9) zwischen zwei Zonen eindeutig bestimmbar ist, auf welcher Seite der Grenze der Abtastpunkt für die Neutrallage liegt.

12. Vorrichtung nach einem der Ansprüche 8 bis 11,
    dadurch **gekennzeichnet,** daß
    die Auslenkung des Elementes (16) aus der Anzahl der abgetasteten Grenzen (9) zwischen jeweils zwei benachbarten Zonen bestimmt wird.

Fig. 1

# Fig. 2a

# Fig. 2b

Fig. 3a

Fig. 3b

Fig. 3c

# Fig. 4a

# Fig. 4b

## Fig. 5

## Fig. 6a

## Fig. 6b

# Fig. 7

# Fig. 8a

# Fig. 8b

Fig. 9

Fig. 10

Fig. 11

15

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 798 087  (TAKEDA ET AL) <br> * Spalte 2, Zeile 12 - Zeile 33; Abbildung 2 * <br> — — — | 1-3,6,9, 12 | G 01 P 15/08 <br> G 01 C 9/14 |
| X,A | PATENT ABSTRACTS OF JAPAN vol. 5, no. 56 (P-57)(728) 17. April 1981 <br> & JP-A-56 008 557 (SUMITOMO DENKI KOGYO KK ) 28. Januar 1981 <br> * das ganze Dokument * <br> — — — | 1-3,6,6,9, 11,12 | |
| A | FR-A-2 459 960  (FAY) <br> * Seite 1, Zeile 21 - Zeile 39; Abbildungen 1,3,5 * <br> — — — | 1,2,4,6,8, 10 | |
| A | DE-A-3 802 461  (HERRMANN) <br> * Spalte 2, Zeile 1 - Zeile 18; Abbildung 4 * <br> — — — — — | 1,2,4,7 | |
| | | | **RECHERCHIERTE SACHGEBIETE (Int. Cl.5)** |
| | | | G 01 P <br> G 01 C |

Der vorliegende Recherchenbericht wurde für alle Patentansprüche erstellt

| Recherchenort | Abschlußdatum der Recherche | Prüfer |
|---|---|---|
| Den Haag | 05 September 91 | JONSSON P.O. |